# EUROPEAN PATENT APPLICATION

(11) **EP 4 636 394 A1**
(43) Date of publication of application: **22.10.2025**
(21) Application number: 23902588.5
(22) Date of filing: 08.12.2023
(51) Int. Cl.: G01N 27/30, G01N 27/327

(54) **BIOSENSOR FOR MEASURING PARTIAL PRESSURE OF OXYGEN, AND PREPARATION METHOD THEREFOR**

(30) Priority: 12.12.2022 CN 202211596916
(71) Applicant: Leadway (HK) Limited, Sheung Wan, Hong Kong (CN)
(72) Inventor: HAN, Zheyong, Hangzhou, Zhejiang 310030 (CN); WANG, Yi, Hangzhou, Zhejiang 310030 (CN); WU, Yapan, Hangzhou, Zhejiang 310030 (CN); ZHANG, Li, Hangzhou, Zhejiang 310030 (CN)
(74) Representative: Schiweck Weinzierl Koch Patentanwälte Partnerschaft mbB
(86) International application number: PCT/CN2023/137312
(87) International publication number: WO 2024/125392

(57) **Abstract**

The present invention provides a biosensor for measuring the oxygen partial pressure, and a preparation method therefor. The biosensor comprises an electrode system and an insulating layer; the electrode system at least comprises a working electrode and a counter electrode; the working electrode is covered with an electrolyte layer; the electrolyte layer is covered with an oxygen permeable membrane; the oxygen permeable membrane or the insulating layer comprises an ether-containing organic polymer. According to the present invention, by using the oxygen permeable membrane or the insulating layer with an ether-containing organic polymer, the electrode slope can be remarkably increased, and the precision of a biosensor is improved.

## Description

### Technical Field

The present invention relates to the field of blood gas analysis technology, specifically to a biosensor for measuring oxygen partial pressure and its preparation method.

### Background

Oxygen partial pressure in blood is one of the indicators for blood gas detection, which can reflect the oxygen content in blood. Oxygen is a gas essential for human respiration and energy metabolism. Oxygen enters into arterial blood through the lung. The normal arterial oxygen partial pressure in humans ranges from 80 to 105 mmHg. Hypoxia can cause damage to the respiratory, digestive, hematological, and central nervous systems, and may even cause patients fall into a coma. When the oxygen partial pressure drops below 20mmHg, life becomes difficult to sustain. Therefore, real-time monitoring of oxygen partial pressure is crucial in clinical rescue.

The oxygen partial pressure in blood can be detected through a combination of a biosensor for oxygen partial pressure and a blood gas analyzer. The biosensor for oxygen partial pressure comprises an electrode system and an insulating layer on the periphery of the electrode system. The electrode system typically consists of a working electrode and a counter electrode, and in a three-electrode system, it also includes a reference electrode. The working electrode is covered with an electrolyte layer, which is in turn covered with an oxygen permeable membrane. When blood immerses the oxygen permeable membrane, oxygen in the blood permeates through the oxygen permeable membrane and undergoes an electrochemical reaction on the working electrode, generating a current signal that is linearly related to the oxygen partial pressure. This signal is then used by the blood gas analyzer to calculate the oxygen partial pressure.

The electrode slope of the biosensor for oxygen partial pressure refers to the slope of a fitting curve between the current value generated by the sample reacting on the electrode surface and the sample's oxygen partial pressure. The slope is correlated with the biosensor's accuracy: a larger slope indicates better biosensor accuracy. In prior art, commonly used materials for the oxygen permeable membrane on the working electrode in the biosensor for oxygen partial pressure include silicone, polytetrafluoroethylene, cellulose acetate, and polyvinyl chloride, etc.. The insulating layer on the periphery of the electrode system is generally composed of polyester, polycarbonate, polyvinyl chloride, ceramics, alumina, etc.. However, the biosensor for oxygen partial pressure prepared using these conventional oxygen permeable membrane/insulating layer materials exhibit a relatively small electrode slope and insufficient biosensor accuracy.

### SUMMARY

In view of the problem of low accuracy of a blood oxygen partial pressure biosensor caused by conventional oxygen permeable membrane/insulating layer materials, the present invention incorporates an ether-containing organic polymer into the materials of the oxygen permeable membrane or the insulating layer, thereby significantly increasing the slope of the blood oxygen partial pressure biosensor and improving accuracy of the biosensor.

The technical solution of the present invention to solve the above technical problem is as follows: a biosensor for measuring oxygen partial pressure, comprising an electrode system and an insulating layer, wherein the electrode system comprises at least one working electrode and one counter electrode, the working electrode is covered with an electrolyte layer, and the electrolyte layer is covered with an oxygen permeable membrane, characterized in that the oxygen permeable membrane or the insulating layer comprises an ether-containing organic polymer.

The biosensor further comprises a calibration solution fill port and a sample solution fill port.

As a preferred embodiment of the biosensor for measuring oxygen partial pressure, the oxygen permeable membrane comprises an ether-containing organic polymer, while the insulating layer doesn't comprise an ether-containing organic polymer.

As a preferred embodiment of the biosensor for measuring oxygen partial pressure, the oxygen permeable membrane does not comprise an ether-containing organic polymer, while the insulating layer comprises an ether-containing organic polymer.

As a preferred embodiment of the biosensor for measuring oxygen partial pressure, both the oxygen permeable membrane and the insulating layer comprise an ether-containing organic polymer.

As a preferred embodiment of the biosensor for measuring oxygen partial pressure, the ether-containing organic polymer is solid at room temperature, insoluble in water, and cannot be dispersed in water to form an emulsion.

As a preferred embodiment of the biosensor for measuring oxygen partial pressure, the ether-containing organic polymer is selected from thermoplastic silicone polyether polyurethane, polyether sulfone, or epoxy resin.

As a preferred embodiment of the biosensor for measuring oxygen partial pressure, the concentration of the thermoplastic silicone polyether polyurethane is 0.5%~10%.

As a preferred embodiment of the biosensor for measuring oxygen partial pressure, the concentration of the thermoplastic silicone polyether polyurethane is 0.8%~6.0%. The present invention also provides a method for preparing a biosensor for measuring oxygen partial pressure, comprising the following steps:
Step 1: forming an electrode system by electroplating, chemical plating, or screen printing, wherein the electrode system comprises at least one working electrode and one counter electrode;
Step 2: applying an insulating material to the peripheral part of the electrode system to form an insulating layer;
Step 3: pre-preparing an electrolyte solution and uniformly coating the electrolyte solution on the working electrode to form an electrolyte layer;
Step 4: pre-preparing an oxygen permeable membrane solution and uniformly coating the oxygen permeable membrane solution on the electrolyte layer to form an oxygen permeable membrane;
wherein, the oxygen permeable membrane or the insulating layer comprises an ether-containing organic polymer.

As a preferred embodiment of the method for preparing the biosensor for measuring oxygen partial pressure, the oxygen permeable membrane comprises an ether-containing organic polymer, while the insulating layer doesn't comprise an ether-containing organic polymer.

As a preferred embodiment of the method for preparing the biosensor for measuring oxygen partial pressure, the oxygen permeable membrane does not comprise an ether-containing organic polymer, while the insulating layer comprises an ether-containing organic polymer.

As a preferred embodiment of the method for preparing the biosensor for measuring oxygen partial pressure, both the oxygen permeable membrane and the insulating layer comprise an ether-containing organic polymer.

As a preferred embodiment of the method for preparing the biosensor for measuring oxygen partial pressure, the ether-containing organic polymer is selected from thermoplastic silicone polyether polyurethane, polyether sulfone, or epoxy resin.

As a preferred embodiment of the method for preparing the biosensor for measuring oxygen partial pressure, the concentration of the thermoplastic silicone polyether polyurethane is 0.5%~10%.

As a further preferred embodiment of the method for preparing the biosensor for measuring oxygen partial pressure, the concentration of the thermoplastic silicone polyether polyurethane is 0.8%~6.0%.

As a preferred embodiment of the method for preparing the biosensor for measuring oxygen partial pressure, the oxygen permeable membrane exists in one, two, or multiple layers.

The beneficial effect of the present invention is that by using an ether-containing organic polymer in the oxygen permeable membrane or the insulating layer material of the biosensor for measuring oxygen partial pressure, the slope of the biosensor can be significantly increased, thereby improving the biosensor's accuracy.

### BRIEF DESCRIPTION OF THE DRAWINGS

Figure 1 is a top view of the biosensor of the present invention;
Figure 2 is a cross-sectional view of Figure 1 along the A-A direction;
Figure 3 is a schematic diagram of the working process of the biosensor;
Figure 4 shows the fitting curves of a biosensor with TSPU2080A oxygen permeable membrane, a biosensor with TSPCU2090 oxygen permeable membrane, and a biosensor without an oxygen permeable membrane in Embodiment 1;
Figure 5 shows the fitting curves of biosensors with TSPU2080A oxygen permeable membranes at different concentrations in Embodiment 2;
Figure 6 shows the fitting curves of a biosensor with polyethersulfone oxygen permeable membrane, a biosensor with TSPCU2090 oxygen permeable membrane, and a biosensor without an oxygen permeable membrane in Embodiment 3;
Figure 7 is a top view of a biosensor with an epoxy resin insulating layer;
Figure 8 is a cross-sectional view of Figure 7 along the A-A direction;
Figure 9 shows the fitting curves of four types of biosensors: a biosensor with epoxy resin insulating layer and TSPU2080A oxygen permeable membrane, a biosensor with epoxy resin insulating layer and TSPCU2090 oxygen permeable membrane, a biosensor with Gwent insulating layer and TSPU2080A oxygen permeable membrane, and a biosensor with Gwent insulating layer and TSPCU2090 oxygen permeable membrane.

### DETAILED DESCRIPTION OF EMBODIMENTS

The following provides a detailed description of the present invention in conjunction with specific embodiments. These specific embodiments are merely limited enumerations without violating the spirit of the present invention and do not exclude other specific implementations generated by combining existing technologies with the present invention by those skilled in the art.

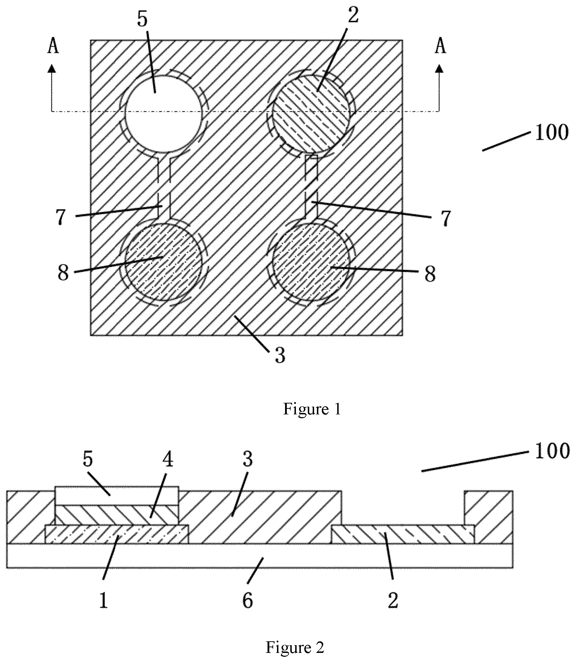

A biosensor 100, as shown in Figures 1 and 2, comprises a working electrode 1, a counter electrode 2, an insulating layer 3, an electrolyte layer 4, an oxygen permeable membrane 5, and a substrate 6. The material of the working electrode 1 is selected from a material with good conductivity, such as gold, silver, copper, platinum, carbon, etc. The material of the counter electrode 2 may be silver. The working electrode 1 and the counter electrode 2 are formed on the surface of the substrate 6, and both the working electrode 1 and the counter electrode 2 are connected to pins 8 through leads 7, and the electrical signals of the working electrode 1 and the counter electrode 2 are connected to an external testing device through the leads 7 and the pins 8 for obtaining the current value generated when the sample reacts on the surface of the working electrode 1. The insulating layer 3 covers the peripheral parts of the working electrode 1, the counter electrode 2, and the pins 8 on the substrate 6, and leaves the working electrode 1, the counter electrode 2, and the pins 8 exposed. The electrolyte layer 4 covers the surface of the working electrode 1, and the oxygen permeable membrane 5 covers the surface of the electrolyte layer 4. The oxygen permeable membrane 5 protects the electrolyte layer 4 and allows oxygen in the sample to pass through.

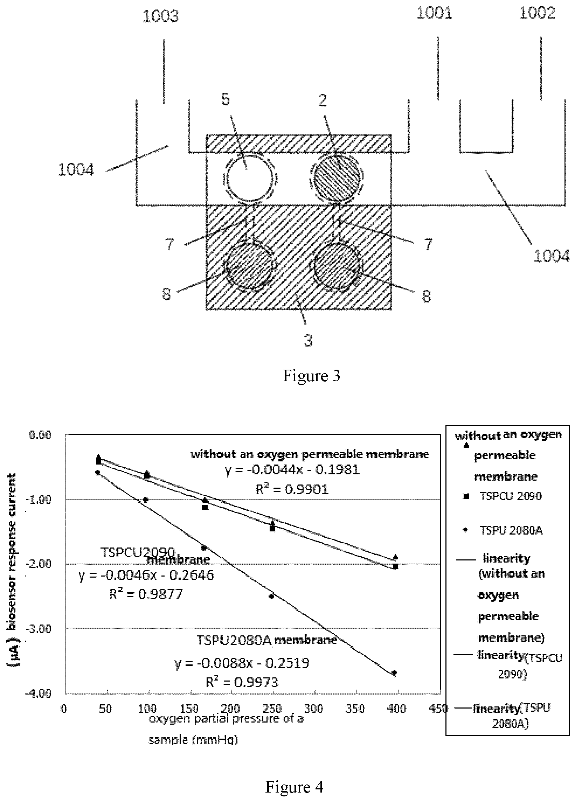

The working process of the biosensor 100: as shown in Figure 3, first, a calibration solution with a known oxygen partial pressure concentration is injected into a channel 1004 through a calibration solution fill port 1001 to cover the areas of the working electrode 1 and the counter electrode 2. The external testing device is connected to the working electrode 1 and the counter electrode 2 through the pins 8 and the leads 7 to form a test circuit, and a potential of -0.8V is applied to the working electrode 1, and a potential of 0V is applied to the counter electrode 2, thereby forming a potential difference of 0.8V between the working electrode 1 and the counter electrode 2. After applying the potential difference for 0.8s, the current value between the working electrode 1 and the counter electrode 2 is read on the external testing device, and the standard curve of the oxygen partial pressure biosensor is calibrated. After the calibration, the calibration solution is pushed into a waste fluid area 1003, and then the sample solution is injected into the channel 1004 through a sample fill port 1002 to cover the areas of the working electrode 1 and the counter electrode 2. The external testing device is connected to the working electrode 1 and the counter electrode 2 through the pins 8 and the leads 7 to form a test circuit in order to read the current signal.

The reaction process of the biosensor 100 is as follows:

working electrode (cathode): *O₂*+*4H*⁺*+4e*⁻→*2H₂O*

counter electrode (anode): *Ag+Cl⁻*→*AgCl+e⁻*

The oxygen permeable membrane 5 covering the working electrode 1 and the insulating layer 3 located at the peripheral part of the working electrode 1 contain an ether substance, which can react with an analyte to be measured (such as oxygen) to generate a peroxide.

*RCH₂OR'*+*O₂+e⁻*→*RCH(OO⁻)OR'*

### Embodiment 1: the slope of a biosensor with an ether-based oxygen permeable membrane (thermoplastic silicone polyether polyurethane oxygen permeable membrane)

This embodiment compares the slopes between the electrode current values and the oxygen partial pressure concentrations of the sample for three types of biosensors: a biosensor with an ether-based oxygen permeable membrane, a biosensor with an oxygen permeable membrane without ether groups, and a biosensor without an oxygen permeable membrane. The ether-based oxygen permeable membrane is a thermoplastic silicone polyether polyurethane oxygen permeable membrane, and the oxygen permeable membrane without ether groups is a thermoplastic silicone polycarbonate polyurethane oxygen permeable membrane. The preparation steps for these three types of biosensors are as follows.

The preparation of the biosensor with the thermoplastic silicone polyether polyurethane oxygen permeable membrane includes the following steps:
(1) forming a gold layer on the substrate 6 by electroplating or chemical plating as the working electrode 1, leads 7, and pins 8; forming a silver layer on the substrate 6 by electroplating, chemical plating, or screen printing as the counter electrode 2.
(2) coating insulating ink on the peripheral parts of the working electrode 1, the counter electrode 2, and the pins 8 on the substrate 6 by screen printing, and forming an insulating layer 3 after drying. The insulating ink is selected from D2070423P5 Polymer Dielectric product of Gwent Group in the UK, referred to as Gwent insulating layer. The peripheral parts of the working electrode 1 and the counter electrode 2 are covered by the insulating layer 3, and the diameters of the exposed parts of the working electrode 1 and the counter electrode 2 are 1.4mm.
(3) preparing an electrolyte paste and forming the electrolyte layer 4. The preparation method of the electrolyte paste is as follows: dissolving potassium chloride in deionized water to form an electrolyte solution with a potassium chloride concentration of 0.22M. Adding 0.2M glycine and appropriate potassium hydroxide to the electrolyte solution as a buffer solution to adjust the pH value of the electrolyte solution to 8.4. Dissolving 0.274g of sodium cellulose, 0.040g of cellulose, and 0.363g of polyvinylpyrrolidone in 36.2g of deionized water, stirring evenly, and using the mixture as a solution of film-forming agent and thickener. Taking 2.4g of the electrolyte solution with 1.2g of the film-forming agent and thickener solution for mixing to form the electrolyte paste, and finally, adding a surfactant called Triton. Diluting Triton into a 10% aqueous solution, taking 0.02g of the aqueous solution and adding it to the electrolyte paste, mixing evenly, and then using a dispenser to drop the mixture onto the surface of the exposed part of the working electrode 1. The electrolyte paste covers the surface of the working electrode 1 and forms an electrolyte layer 4 after drying in an oven.
(4) dissolving 0.05g of thermoplastic silicone polyether polyurethane (selected from PurSil^{®}20 80A UR TSPU product of DSM Biomedical B.V., referred to as TSPU2080A) in 1.950g of isophorone to form an oxygen permeable membrane solution with a concentration of 2.5%, and using a dispenser to drop the oxygen permeable membrane solution onto the electrolyte layer 4, followed by drying in an oven to form an oxygen permeable membrane 5, thus completing the preparation of the biosensor with TSPU2080A oxygen permeable membrane.

The preparation of the biosensor with the oxygen permeable membrane without ether groups (thermoplastic silicone polycarbonate polyurethane oxygen permeable membrane) includes the following steps:
Steps (1), (2), and (3) are the same as those for the preparation of the biosensor with the TSPU2080A oxygen permeable membrane. Step (4): taking 0.05g of thermoplastic silicone polycarbonate polyurethane (selected from CarboSil^{®}20 90A UR TSPCU product of DSM Biomedical B.V., referred to as TSPCU2090) and dissolving it in 1.950g of N,N-dimethylacetamide to form an oxygen permeable membrane solution with a concentration of 2.5%, and using a dispenser to drop the oxygen permeable membrane solution onto the electrolyte layer 4, followed by drying in an oven to form an oxygen permeable membrane, thus completing the preparation of the biosensor with TSPCU2090 oxygen permeable membrane.

The preparation of the biosensor without an oxygen permeable membrane includes the following steps:
After steps (1), (2), and (3) of the preparation of the biosensor with the TSPU2080A oxygen permeable membrane, the biosensor without an oxygen permeable membrane is completed.

The above-prepared biosensor with TSPU2080A oxygen permeable membrane, biosensor with TSPCU2090 oxygen permeable membrane, and biosensor without an oxygen permeable membrane are connected to an external testing device for testing five sample solutions with different oxygen partial pressure concentrations respectively. Each biosensor generates a current signal linearly related to the oxygen partial pressure value of the sample, and the current value is read by the external testing device. Each sample is tested four times, and the average current value is taken. The standard values of the oxygen partial pressures of the five sample solutions are measured by the ABL80 blood gas analyzer of Radiometer Medical ApS, Denmark. Taking the oxygen partial pressure value measured by the ABL80 analyzer as the horizontal axis and the average current value measured by the testing device as the vertical axis, the fitting curves of the three types of biosensors for measuring oxygen partial pressure are plotted, and the obtained data are shown in Table 1 and Figure 4. In the present invention, the negative sign in the current and slope values only represents the direction of the current, and the comparison of the slopes refers to the comparison of their absolute values.

**Table 1**

| Biosensor Type | Slope | CV Value |
|---|---|---|
| With TSPU3080A Oxygen Permeable Membrane | -0.0088 | 5.4% |
| With TSPCU2090 Oxygen Permeable Membrane | -0.0046 | 8.5% |
| Without an Oxygen Permeable Membrane | -0.0044 | 9.3% |

The data results of Table 1 show that the electrode slope of the oxygen partial pressure biosensor with the ether-based oxygen permeable membrane (TSPU2080A oxygen permeable membrane) is the largest, at -0.0088, significantly larger than those of the oxygen partial pressure biosensor with TSPCU2090 oxygen permeable membrane and the oxygen partial pressure biosensor without an oxygen permeable membrane. Moreover, the CV value of the oxygen partial pressure biosensor with TSPU2080A oxygen permeable membrane is the smallest, at 5.4%, indicating better accuracy. Therefore, when the oxygen permeable membrane material of the oxygen partial pressure biosensor contains ether groups, it can significantly increase the efficiency of the oxygen partial pressure biosensor and improve the electrode accuracy.

### Embodiment 2: Slope of biosensors with TSPU2080A oxygen permeable membrane at different concentrations

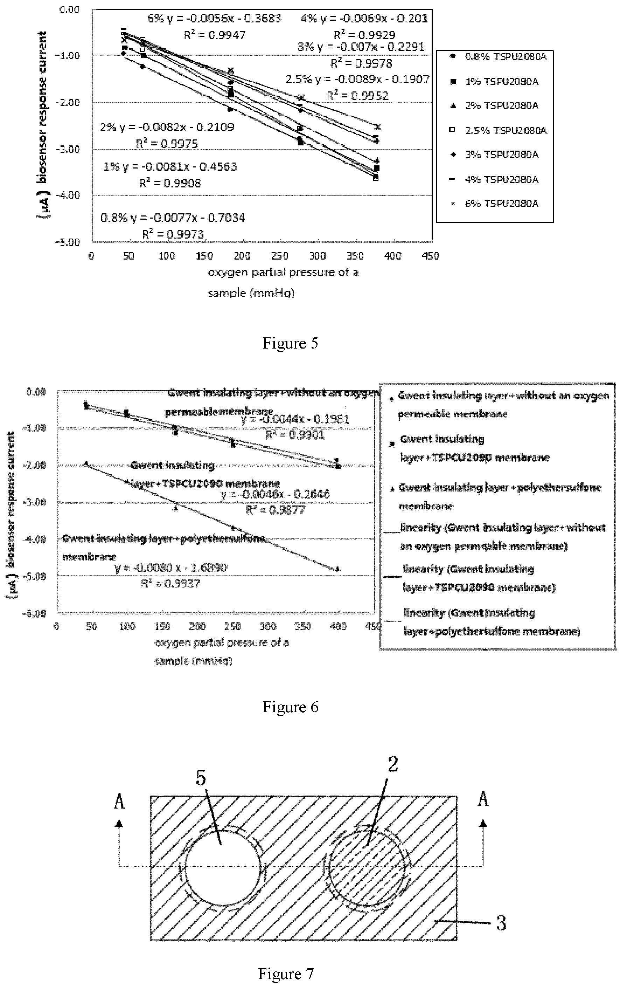

This embodiment prepares biosensors with TSPU2080A oxygen permeable membrane at different concentrations. The preparation steps are the same as those for the biosensor with TSPU2080A oxygen permeable membrane in Embodiment 1, except that the masses of TSPU2080A and isophorone in step (4) are changed to obtain oxygen permeable membranes with concentrations of 0.8%, 1.0%, 2.0%, 2.5%, 3.0%, 4.0%, and 6.0%, respectively. According to the method of plotting the fitting curves of the current values and oxygen partial pressure values in Embodiment 1, the fitting curves of these oxygen partial pressure biosensors with TSPU2080A oxygen permeable membranes of different concentrations are plotted, and the results are shown in Table 2 and Figure 5.

**Table 2**

| The concentration of TSPU2080A | Slope | CV Value |
|---|---|---|
| 0.8% | -0.0077 | 8.0% |
| 1.0% | -0.0081 | 6.6% |
| 2.0% | -0.0082 | 5.4% |
| 2.5% | -0.0089 | 4.9% |
| 3.0% | -0.0070 | 5.7% |
| 4.0% | -0.0069 | 7.2% |
| 6.0% | -0.0056 | 8.1% |

The data results of Table 2 show that when the concentration of TSPUA is 0.8%~6. 0%, the biosensors with TSPU2080A oxygen permeable membrane all exhibit large slope and good accuracy.

### Embodiment 3: Slope of a biosensor with ether-based oxygen permeable membrane (polyethersulfone oxygen permeable membrane)

This embodiment compares the slopes between the electrode current values and the oxygen partial pressure concentrations of the sample for three types of biosensors: a biosensor with an ether-based oxygen permeable membrane (polyethersulfone oxygen permeable membrane), a biosensor with an oxygen permeable membrane without ether groups (TSPCU2090 oxygen permeable membrane), and a biosensor without an oxygen permeable membrane.

The preparation of the biosensor with the polyethersulfone oxygen permeable membrane includes the following steps:
Steps (1), (2), and (3) are the same as those for the preparation of the biosensor with the TSPU2080A oxygen permeable membrane. Step (4): taking 0.05g of polyethersulfone and dissolving it in 1.950g of N,N-dimethylacetamide to form an oxygen permeable membrane solution with a concentration of 2.5%, and using a dispenser to drop the oxygen permeable membrane solution onto the electrolyte layer 4, followed by drying in an oven to form an oxygen permeable membrane, thus completing the preparation of the biosensor with the polyethersulfone oxygen permeable membrane.

According to the method of plotting the fitting curves of the current values and oxygen partial pressure values in Embodiment 1, the fitting curve of the oxygen partial pressure biosensor with polyethersulfone oxygen permeable membrane is plotted, and compared with those of the biosensor with TSPCU2090 oxygen permeable membrane and the biosensor without an oxygen permeable membrane in Embodiment 1. The results are shown in Table 3 and Figure 6.

**Table 3**

| Biosensor Type | Slope | CV Value |
|---|---|---|
| With Polyethersulfone Oxygen Permeable Membrane | -0.0080 | 5.7% |
| With TSPCU2090 Oxygen Permeable Membrane | -0.0046 | 8.5% |
| Without an Oxygen Permeable Membrane | -0.0044 | 9.3% |

The data results of Table 3 show that the electrode slope of the biosensor with the polyethersulfone oxygen permeable membrane is the largest, at -0.0080, significantly larger than those of the oxygen partial pressure biosensor with TSPCU2090 oxygen permeable membrane and the oxygen partial pressure biosensor without oxygen permeable membrane. Moreover, the CV value of the oxygen partial pressure biosensor with the polyethersulfone oxygen permeable membrane is the smallest, at 5.7%, indicating better accuracy. Therefore, when the oxygen permeable membrane material of the oxygen partial pressure biosensor contains ether groups, it can significantly increase the efficiency of the oxygen partial pressure biosensor and improve the electrode accuracy.

### Embodiment 4: Slope of a biosensor with an epoxy-based insulating layer (epoxy resin insulating layer)

This embodiment compares the slopes of four types of biosensors: a biosensor with an ordinary insulating layer and TSPU2080A oxygen permeable membrane, a biosensor with an ordinary insulating layer and TSPCU2090 oxygen permeable membrane, a biosensor with an epoxy-based insulating layer and TSPU2080A oxygen permeable membrane, and a biosensor with an epoxy-based insulating layer and TSPCU2090 oxygen permeable membrane. The ordinary insulating layer is the Gwent insulating layer in Embodiments 1, 2 and 3, whose components are polyester, polyvinyl chloride, polycarbonate, ceramics, alumina, and do not contain epoxy groups. The epoxy-based insulating layer in this embodiment is an epoxy resin insulating layer.

The preparation of the biosensor with the epoxy resin insulating layer and TSPU2080A oxygen permeable membrane includes the following steps:
(1) forming a gold layer by electroplating or chemical plating as the working electrode 1, and forming a silver layer by electroplating or chemical plating as the counter electrode 2.
(2) adhering an insulating sheet containing epoxy resin to the peripheral parts of the working electrode 1 and the counter electrode 2 to form an insulating layer 3, and leaving the working electrode 1 and the counter electrode 2 exposed. The diameters of the exposed parts of the working electrode 1 and the counter electrode 2 are 1.4mm.
(3) preparing the electrolyte paste and forming the electrolyte layer 4. The preparation method of the electrolyte paste is as follows: dissolving potassium chloride in deionized water to form an electrolyte solution with a potassium chloride concentration of 0.22M. Adding 0.2M glycine and appropriate potassium hydroxide to the electrolyte solution as a buffer solution to adjust the pH value of the electrolyte solution to 8.4. Dissolving 0.274g of sodium cellulose, 0.040g of cellulose, and 0.363g of polyvinylpyrrolidone in 36.2g of deionized water, stirring evenly, and using the mixture as a solution of film-forming agent and thickener. Taking 2.4g of the electrolyte solution with 1.2g of the film-forming agent and thickener solution for mixing to form the electrolyte paste, and adding a surfactant called Triton. Diluting Triton into a 10% aqueous solution, taking 0.02g of the aqueous solution and adding it to the electrolyte paste, mixing evenly, and then using a dispenser to drop the mixture onto the exposed surface of the working electrode 1. The electrolyte paste covers the surface of the working electrode 1 and forms an electrolyte layer 4 after drying in an oven.
(4) taking 0.05g of TSPU2080A and dissolving it in 1.950g of isophorone to form an oxygen permeable membrane solution with a concentration of 2.5%, and using a dispenser to drop the oxygen permeable membrane solution onto the electrolyte layer 4, followed by drying in an oven to form an oxygen permeable membrane, thus completing the preparation of the biosensor with the epoxy resin insulating layer and TSPU2080A oxygen permeable membrane.

The preparation of the biosensor with the epoxy resin insulating layer and TSPCU2090 oxygen permeable membrane includes the following steps:
Steps (1), (2), and (3) are the same as those for the preparation of the biosensor with the epoxy resin insulating layer and TSPU2080A oxygen permeable membrane. Step (4): taking 0.05g of TSPCU2090 and dissolving it in 1.950g of N,N-dimethylacetamide to form an oxygen permeable membrane solution with a concentration of 2.5%, and using a dispenser to drop the oxygen permeable membrane solution onto the electrolyte layer 4, followed by drying in an oven to form an oxygen permeable membrane, thus completing the preparation of the biosensor with the epoxy resin insulating layer and TSPCU2090 oxygen permeable membrane.

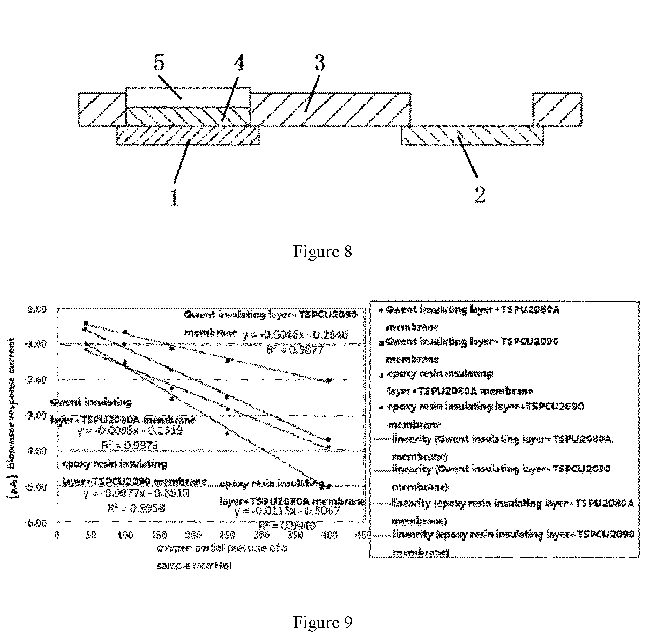

The top view and cross-sectional view of the biosensor with the epoxy resin insulating layer in this embodiment are shown in Figures 7 and 8.

According to the method of plotting the fitting curves of the current values and oxygen partial pressure values in Embodiment 1, the fitting curves of the biosensor with an epoxy-based insulating layer and TSPU2080A oxygen permeable membrane and the biosensor with an epoxy-based insulating layer and TSPCU2090 oxygen permeable membrane are plotted, and compared with those of the biosensor with the Gwent insulating layer and TSPUA oxygen permeable membrane, and the biosensor with the Gwent insulating layer and TSPCU oxygen permeable membrane in Embodiment 1. The results are shown in Table 4 and Figure 9.

**Table 4**

| Biosensor Type | Slope | CV Value |
|---|---|---|
| With epoxy resin insulating layer and TSPU2080A oxygen permeable membrane | -0.0115 | 5.3% |
| With epoxy resin insulating layer and TSPCU2090 oxygen permeable membrane | -0.0077 | 7.5% |
| With Gwent insulating layer and TSPU2080A oxygen permeable membrane | -0.0088 | 5.4% |
| With Gwent insulating layer and TSPCU2090 oxygen permeable membrane | -0.0046 | 8.5% |

The data results of Table 4 show that the slope of the oxygen partial pressure biosensor with the epoxy resin insulating layer and TSPU2080A oxygen permeable membrane is -0.0115, significantly larger than that of the oxygen partial pressure biosensor with the Gwent insulating layer and TSPU2080A oxygen permeable membrane (-0.0088). Similarly, the slope of the oxygen partial pressure biosensor with the epoxy resin insulating layer and TSPCU2090 oxygen permeable membrane (-0.0077) is also larger than that of the oxygen partial pressure biosensor with the Gwent insulating layer and TSPCU2090 oxygen permeable membrane (-0.0046). Therefore, when the insulating layer of the oxygen partial pressure biosensor contains epoxy groups, it can significantly increase the efficiency of the oxygen partial pressure biosensor and improve the electrode accuracy.

### Embodiment 5 : Detection of an oxygen partial pressure value of a sample using a biosensor with TSPU2080A oxygen permeable membrane

Five samples with different oxygen partial pressure concentrations are taken, and their oxygen partial pressure values are measured by the ABL80 blood gas analyzer of Radiometer Medical ApS, Denmark, which are 40mmHg, 98mmHg, 167mmHg, 249mmHg, and 397mmHg, respectively. The biosensor with TSPU2080A oxygen permeable membrane prepared in Embodiment 1 is used to detect the oxygen partial pressure values of these five samples. Each sample is tested four times, and the average value is taken as the oxygen partial pressure value. The results are shown in Table 5.

**Table 5**

| Oxygen partial pressure values measured by ABL80 blood gas analyzer (mmHg) | | | | | |
|---|---|---|---|---|---|
| the oxygen partial pressure values of the five samples (mmHg) | 40 | 98 | 167 | 249 | 397 |

| | Current values (µA) | | | | |
|---|---|---|---|---|---|
| first measurement | -0.63 | -1.01 | -1.77 | -2.45 | -3.67 |
| second measurement | -0.58 | -0.99 | -1.73 | -2.46 | -3.60 |
| third measurement | -0.64 | -1.09 | -1.89 | -2.43 | -3.81 |
| fourth measurement | -0.60 | -1.03 | -1.66 | -2.70 | -3.70 |
| average value | -0.61 | -1.03 | -1.76 | -2.51 | -3.69 |
| standard deviation | 0.02 | 0.05 | 0.10 | 0.13 | 0.09 |
| CV Value | -4.0% | -4.4% | -5.4% | -5.2% | -2.4% |

| | oxygen partial pressure values measured by biosensor with TSPU2080A oxygen permeable membrane (mmHg) | | | | |
|---|---|---|---|---|---|
| first measurement | 42.62 | 85.96 | 172.98 | 250.13 | 388.77 |
| second measurement | 37.62 | 84.16 | 168.40 | 251.80 | 380.84 |
| third measurement | 43.87 | 95.84 | 186.75 | 248.05 | 405.03 |
| fourth measurement | 40.12 | 88.33 | 160.89 | 279.32 | 392.52 |
| average value | 41.06 | 88.57 | 172.25 | 257.32 | 391.79 |
| standard deviation | 2.77 | 5.14 | 10.87 | 14.74 | 10.08 |
| CV value | 6.8% | 5.8% | 6.3% | 5.7% | 2.6% |

The data results of Table 5 show that the biosensor with TSPU2080A oxygen permeable membrane has good detection accuracy when measuring oxygen partial pressures of low, medium, and high concentrations, with relatively small CV values.

## Claims

1. A biosensor for measuring oxygen partial pressure, comprising an electrode system, an insulating layer, a calibration solution fill port, and a sample solution fill port, wherein the electrode system comprises at least one working electrode and one counter electrode, the working electrode is covered with an electrolyte layer, and the electrolyte layer is covered with an oxygen permeable membrane, **characterized in that** the oxygen permeable membrane or the insulating layer comprises an ether-containing organic polymer.

2. The biosensor for measuring oxygen partial pressure according to claim 1, **characterized in that** the oxygen permeable membrane comprises an ether-containing organic polymer, while the insulating layer does not comprise an ether-containing organic polymer; or the oxygen permeable membrane does not comprise an ether-containing organic polymer, while the insulating layer comprises an ether-containing organic polymer; or both the oxygen permeable membrane and the insulating layer comprise an ether-containing organic polymer.

3. The biosensor for measuring oxygen partial pressure according to claim 1 or 2, **characterized in that** the ether-containing organic polymer is selected from thermoplastic silicone polyether polyurethane, polyether sulfone, or epoxy resin.

4. The biosensor for measuring oxygen partial pressure according to claim 3, **characterized in that** the concentration of the thermoplastic silicone polyether polyurethane is 0.5%~10%.

5. The biosensor for measuring oxygen partial pressure according to claim 4, **characterized in that** the concentration of the thermoplastic silicone polyether polyurethane is 0.8%~6.0%.

6. A preparation method for a biosensor for measuring oxygen partial pressure, **characterized in that** it comprises the following steps:
Step 1: forming an electrode system by electroplating, chemical plating, or screen printing, wherein the electrode system comprises at least one working electrode and one counter electrode;
Step 2: applying an insulating material to the peripheral portion of the electrode system to form an insulating layer;
Step 3: pre-preparing an electrolyte solution and uniformly coating the electrolyte solution on the working electrode to form an electrolyte layer;
Step 4: pre-preparing an oxygen permeable membrane solution and uniformly coating the oxygen permeable membrane solution on the electrolyte layer to form an oxygen permeable membrane;
wherein, the oxygen permeable membrane or the insulating layer comprises an ether-containing organic polymer.

7. The preparation method according to claim 6, **characterized in that** the oxygen permeable membrane comprises an ether-containing organic polymer, while the insulating layer does not comprise an ether-containing organic polymer; or the oxygen permeable membrane does not comprise an ether-containing organic polymer, while the insulating layer comprises an ether-containing organic polymer; or both the oxygen permeable membrane and the insulating layer comprise an ether-containing organic polymer.

8. The preparation method according to claim 6 or 7, **characterized in that** the ether-containing organic polymer is selected from thermoplastic silicone polyether polyurethane, polyether sulfone, or epoxy resin.

9. The preparation method according to claim 8, **characterized in that** the concentration of the thermoplastic silicone polyether polyurethane is 0.5%~10%.

10. The preparation method according to claim 9, **characterized in that** the concentration of the thermoplastic silicone polyether polyurethane is 0.8%~6.0%.
